# EUROPÄISCHE PATENTSCHRIFT

(11) **EP 0 611 247 B1**
(45) Veröffentlichungstag und Bekanntmachung des Hinweises auf die Patenterteilung: **03.03.1999**
(21) Anmeldenummer: 94810020.1
(22) Anmeldetag: 14.01.1994
(51) Int. Cl.: B23B 31/11, B23B 31/26

(54) **Verfahren zum Einspannen eines Werkzeuges in ein Bearbeitungsgerät und Bearbeitungsmaschine zur Durchführung des Verfahrens**
Method for clamping of a tool in an apparatus and machine to use this method
Méthode de serrage d'un outil dans un appareil et machine pour utiliser cette méthode

(30) Priorität: 25.01.1993 CH 204/93
(43) Veröffentlichungstag der Anmeldung: 17.08.1994
(73) Patentinhaber: DAMATEC AG, 9630 Wattwil (CH)
(72) Erfinder: Bauer, Hans, CH-9630 Wattwil (CH); Bory, Michael, CH-9630 Wattwil (CH)
(74) Vertreter: Kulhavy, Sava, Dipl.-Ing.

(56) Entgegenhaltungen:
- CH-A- 665 784
- DE-A- 1 961 673
- DE-A- 3 540 109
- DE-A- 3 711 412
- DE-U- 9 107 604
- GB-A- 2 137 124

## Beschreibung

Die vorliegende Erfindung betrifft ein Verfahren zum Einspannen eines Werkzeuges in ein Bearbeitungsgerät gemäß dem Oberbegriff des Patentanspruchs 1 und wie aus der CH-A-665 784 bekannt. Weiterhin betrifft die Erfindung eine Bearbeitungsmaschine zur Durchführung des Verfahrens

Aus der CH-A-665 784 ist ein Ultraschall-Bearbeitungsgerät bekannt, bei welchem das Werkzeug oder die Sonotrode mittels einer Differentialschraube befestigt wird. Das Gerät hat eine axiale Durchgangsbohrung, in welcher ein Schlüssel zum Spannen und Lösen der Differentialschraube permanent eingesetzt ist. Der Schlüssel ist gegenüber dem Gerät axial verschiebbar und wird durch eine Feder in seine zurückgezogene Stellung vorbelastet, wo er ausser Eingriff mit der Differentialschraube ist. Zum Drehen der Schraube wird der Schlüssel mittels eines Hubmagneten in Eingriff gebracht und anschliessend gedreht. Diese Art der Verbindung hat sich für die Ultraschallbearbeitung sehr bewährt.

Der vorliegenden Erfindung liegt die Aufgabe zugrunde, ein Verfahren und eine Bearbeitungsmaschine anzugeben, mit welchen das Einspannen eines Werkzeuges automatisiert werden kann. Diese Aufgabe wird durch die Merkmalskombination der Ansprüche 1 und 5 gelöst.

Nachfolgend wird ein Ausführungsbeispiel der Erfindung anhand der Zeichnung erläutert. Darin zeigt:
- Figur 1: Einen schematischen Längsschnitt durch eine Bearbeitungsmaschine, und
- Figur 2: einen vergrösserten Ausschnitt der Verbindung.

Auf Längsführungen 1 eines Maschinengestells 2 ist ein Schlitten 3 in Vorschubrichtung A verschiebbar geführt. Der Schlitten 3 wird mittels eines Pneumatikzylinders 4 bewegt. Mit einer Ventilanordnung 5 kann die Kraft in Vorschubrichtung A getrennt von jener in Rückzugrichtung eingestellt werden. Dazu sind zwei getrennte Druckreduzierventile 6, 7 für die beiden Zylinderanschlüsse vorhanden.

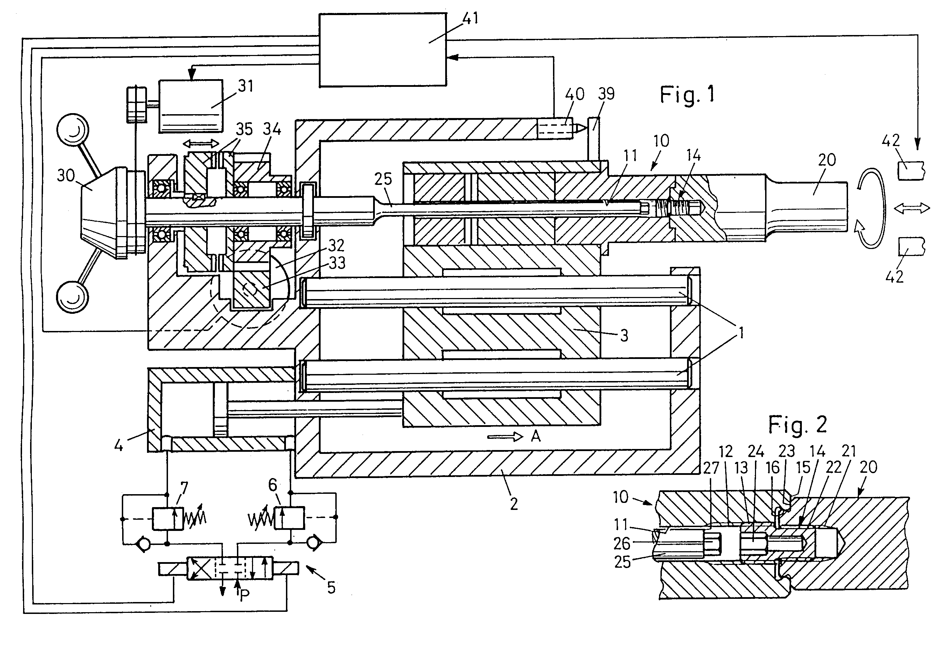

Auf dem Schlitten 3 ist ein Ultraschall-Bearbeitungsgerät 10 montiert, dessen Achse parallel zu den Führungen 1 verläuft. Das Gerät 10 hat eine axiale Durchgangsbohrung 11. Am einen Ende hat die Bohrung 11 ein Innengewinde 12 (Figur 2), in welches ein erstes Gewinde 13 einer Differentialschraube 14 eingeschraubt ist. Stirnseitig hat das Gerät 10 eine Anschlagfläche 15 und eine Zentrierschulter 16.

Das Werkzeug 20 oder die Sonotrode ist mit einem weiteren Innengewinde 21 auf das zweite Gewinde 22 der Differentialschraube 14 aufgeschraubt, liegt mit einer Stirnfläche 23 an der Fläche 15 an und ist in der Schulter 16 zentriert. Die Gewinde 21, 22 haben eine grössere Steigung als die Gewinde 12, 13. Dadurch kann durch Drehen der Differentialschraube 14 ohne Relativdrehung zwischen Gerät 10 und Werkzeug 20 die Verbindung gespannt werden. Die Schraube 14 hat ein Innensechskant 24.

Zum Festziehen und Lösen der Schraube dient ein permanent in der Bohrung 11 eingesetzter Schlüssel 25. Der Schlüssel 25 hat anschliessend an ein Sechskant 26 eine Anschlagschulter 27 zum Anschlag der Schraube 14. Der Schlüssel 25 ist im Gehäuse 2 drehbar aber axial unverschiebbar gelagert. Er kann entweder von Hand mittels eines Drehknopfs 30 oder mittels eines Servomotors 31 zum Einstellen der Schraube 14 gedreht werden. Zum Anziehen der Schraube 14 dient dagegen ein weiterer Pneumatikzylinder 32, der über eine Zahnstange 33 ein zum Schlüssel 25 koaxiales Zahnrad 34 dreht. Der Druck des Zylinders 32 und daher das Drehmoment des Zahnrades 34 ist einstellbar. Das Zahnrad 34 ist über eine pneumatisch oder elektrisch betätigbare Klauenkupplung 35 mit dem Schlüssel 25 kuppelbar.

Am Schlitten ist ein Arm 39 befestigt, der in der in Figur 1 dargestellten zurückgezogenen Grundstellung des Schlittens 3 einen Fühler 40 betätigt. Der Fühler 40 misst den Schlittenhub und ist mit einer Steuereinheit 41 verbunden.

Zum Einspannen des Werkzeuges 20 wird wie folgt vorgegangen: zunächst wird der Schlitten in seine zurückgezogene Grundposition gefahren, wobei der Sechskant 26 in den Innensechskant 24 der Differentialschraube 14 eingreift und die Stirnfläche der Schraube 14 an der Schulter 27 anliegt. Der Schlitten 3 wird mit geringer, durch das Ventil 6 eingestellter Kraft gegen diesen Anschlag gezogen. Nun wird die Schraube 14 mittels des Handrades 30 oder automatisch gesteuert durch die Steuereinheit 41 mittels des Servomotors 31 so gedreht, dass der Fühler 40 eine eingestellte Position meldet. In dieser Position überragt das zweite Gewinde 22 der Differentialschraube 14 die Anschlagfläche 15 um ein exakt definiertes Mass. Nun wird das Werkzeug 20 manuell oder ebenfalls automatisch durch die Steuereinheit 41 gesteuert mittels eines lediglich angedeuteten Werkzeugwechslers 42 auf das Gewinde 22 aufgeschraubt, bis es es reibschlüssig an der Anschlagfläche 15 anliegt. Schliesslich wird nun die Kupplung 35 gekoppelt und der Zylinder 32 mit dem eingestellten Druck beaufschlagt, sodass die Schraube 14 mit einem präzis definierten Drehmoment gespannt wird.

Während der Ultraschallbearbeitung wird der Schlitten in Vorschubrichtung A vorgefahren. Der Schlüssel 25 verbleibt in seiner Drehstellung, damit er beim Rückzug des Schlittens 3 wieder in Eingriff mit der Differentialschraube 14 gelangt. Zum Lösen der Verbindung wird der Zylinder 32 in der Gegenrichtung beaufschlagt, bis er an seinen Anschlag anschlägt. Hierauf wird das Werkzeug 20 manuell oder mittels des Wechslers 42 vom Gewinde 22 abgeschraubt.

Durch die beschriebene Art der Verbindung wird erreicht, dass die Differentialschraube mit einer exakt definierten Anzahl Gängen sowohl in das Gerät 10 als auch in das Werkzeug 20 eingeschraubt ist. Dadurch wird eine hohe Sicherheit der Verbindung ermöglicht. Die erfindungsgemässe Lösung ermöglicht das automatische Auswechseln von Werkzeugen, was bisher bei Ultraschallbearbeitungsvorrichtungen nicht möglich war.

## Patentansprüche

1. Verfahren zum Einspannen eines Werkzeuges (20) in einem Bearbeitungsgerät (10) einer Bearbeitungsmaschine, insbesondere einer Ultraschall-Bearbeitungsmaschine, wobei das Werkzeug (20) im eingespannten Zustand mit dem Bearbeitungsgerät (10) über eine Differentialschraube (14) verbunden ist und das Bearbeitungsgerät (10) eine zur Differentialschraube (14) koaxiale Bohrung (11) hat, in welcher ein Schlüssel (25) zum Drehen der Differentialschraube (14) angeordnet ist, dadurch gekennzeichnet, dass der Schlüssel (25) axial unverschiebbar gehalten wird, dass das Bearbeitungsgerät (10) in eine Position gefahren wird, in welcher eine Stirnfläche (27) des Schlüssels (25) an der Differentialschraube (14) anliegt, dass der Schlüssel (25) so gedreht wird, dass die Differentialschraube (14) um ein vorbestimmtes Mass über eine Anschlagfläche (15) des Bearbeitungsgerätes (10) vorsteht, dass anschliessend das Werkzeug (20) auf die Differentialschraube (14) bis zur reibschlüssigen Anlage am Bearbeitungsgerät (10) aufgeschraubt wird, und dass schliesslich mittels des Schlüssels (25) die Differentialschraube (14) mit einem einstellbaren Drehmoment festgezogen wird.

2. Verfahren nach Anspruch 1, wobei das vorbestimmte Mass des Ueberstehens der Differentialschraube (14) durch Messen der Position des Bearbeitungsgerätes (10) ermittelt wird.

3. Verfahren nach Anspruch 2, wobei die Position mittels eines Fühlers (40) gemessen wird, der über eine Steuereinheit (41) einen Servomotor (31) zum Drehen des Schlüssels (25) steuert.

4. Verfahren nach einem der Ansprüche 1-3, wobei das Werkzeug (20) mittels eines automatischen Werkzeugwechslers (42) auf die Differentialschraube (14) aufgeschraubt wird.

5. Bearbeitungsmaschine zur Durchführung des Verfahrens nach einem der Ansprüche 1-4, umfassend:
- einen auf Führungen (1) eines Gestells (2) verschiebbaren Schlitten (3),
- ein in beiden Richtungen wirksames Huborgan (4) zum Bewegen des Schlittens (3),
- ein auf dem Schlitten (3) montiertes Bearbeitungsgerät (10) mit einer koaxialen, durchgehenden Bohrung (11),
- eine am einen Ende koaxial zur Bohrung (11) in das Bearbeitungsgerät (10) mit einem ersten Gewinde (13) eingeschraubte Differentialschraube (14) mit Schlüsseleingriffsflächen (24),
- einen in die Bohrung (11) mit Spiel eingesetzten Schlüssel (25) zum Eingriff in die Schlüsseleingriffsflächen (23) und mit einer Stirnfläche (27) zum Anschlag an der Differentialschraube (14), wobei der Schlüssel (25) am Gehäuse (2) drehbar aber axial unverschiebbar gelagert ist,
- einen Drehantrieb (32-35) für den Schlüssel, sowie
- ein Messorgan (40) zum Messen des Hubes des Schlittens (3) benachbart seiner zurückgezogenen Grundstellung.

6. Maschine nach Anspruch 5, wobei zusätzlich eine Einrichtung (42) zum automatischen Aufsetzen und Aufschrauben eines Werkzeuges (20) auf das zweite Gewinde (22) der Differentialschraube (14) vorhanden ist.

7. Maschine nach Anspruch 5 oder 6, wobei der Drehantrieb des Schlüssels (25) einen zuschaltbaren Antrieb (32, 33, 34) zum Aufbringen eines einstellbaren Drehmomentes umfasst.

8. Maschine nach Anspruch 7, wobei der zuschaltbare Antrieb (32, 33, 34) aus einem über eine Kupplung (35) mit dem Schlüssel (27) verbindbaren Zahnrad (34), einer mit dem Zahnrad (34) kämmenden Zahnstange (33) und einem mit der Zahnstange (33) verbundenen Zylinderaggregat (32) besteht.

9. Maschine nach einem der Ansprüche 5-8, wobei der Schlüssel (25) mittels eines Servomotors (31) drehbar ist, der über eine Steuereinheit (41) vom Messorgan (40) gesteuert ist.

## Claims

1. Method for clamping a tool (20) in a machining unit (10) of a machine tool, in particular an ultrasound machine tool, the tool (20), in the clamped-in position, being connected to the machining unit (10) via a differential screw (14), and the machining unit (10) having a bore (11) which is coaxial with respect to the differential screw (14) and in which a spanner (25) for turning the differential screw (14) is arranged, characterized in that the spanner (25) is held so that it cannot be displaced axially, in that the machining unit (10) is moved into a position in which an end face (27) of the spanner (25) bears against the differential screw (14), in that the spanner (25) is rotated in such a way that the differential screw (14) projects to a predetermined extent beyond a butting surface (15) of the machining unit (10), in that the tool (20) is then screwed onto the differential screw (14) until it comes into frictional engagement with the machining unit (10), and in that finally the differential screw (14) is tightened with an adjustable torque by means of the spanner (25).

2. Method according to Claim 1, in which the predetermined extent to which the differential screw (14) projects is determined by measuring the position of the machining unit (10).

3. Method according to Claim 2, in which the position is measured by means of a sensor (40) which, via a control unit (41), controls a servo motor (31) for turning the spanner (25).

4. Method according to one of Claims 1-3, in which the tool (20) is screwed onto the differential screw (14) by means of an automatic tool changer (42).

5. Machine tool for carrying out the method according to one of Claims 1-4, comprising:
- a carriage (3) which can be displaced along guides (1) of a frame (2),
- a double-acting lifting member (4) for moving the carriage (3),
- a machining unit (10) which is mounted on the carriage (3) and has a coaxial, continuous bore (11),
- a differential screw (14), with surfaces (24) on which a spanner can engage, which is screwed into the machining unit (10) at one end, coaxially with respect to the bore (11), using a first screw thread (13),
- a spanner (25), which is inserted into the bore (11) with a degree of play, for engaging into the spanner-engagement surfaces (24) and with an end face (27) for butting against the differential screw (14), the spanner (25) being mounted on the housing (2) in such a way that it can be turned but cannot be moved in the axial direction,
- a rotary drive (32-35) for the spanner and,
- a measuring component (40) for measuring the travel of the carriage (3) adjacent to its withdrawn basic position.

6. Machine tool according to Claim 5, in which, in addition, a device (42) for automatically positioning a tool (20) and screwing it onto the second screw thread (22) of the differential screw (14) is present.

7. Machine tool according to Claim 5 or 6, in which the rotary drive of the spanner (25) comprises a drive (32, 33, 34) which can be switched on in order to apply an adjustable torque.

8. Machine tool according to Claim 7, in which the switchable drive (32, 33, 34) comprises a toothed wheel (34) which can be connected to the spanner (25) via a coupling (35), a rack (33) which meshes with the toothed wheel (34) and a cylinder unit (32) which is connected to the rack (33).

9. Machine tool according to one of Claims 5-8, in which the spanner (25) can be turned by means of a servo motor (31) which is controlled, via a control unit (41), by the measuring component (40).

## Revendications

1. Procédé de serrage d'un outil (20) dans un appareil d'usinage (10) d'une machine d'usinage, en particulier d'une machine d'usinage par ultrasons, dans lequel, dans l'état serré, l'outil (20) est raccordé à l'appareil d'usinage (10) par l'intermédiaire d'une vis différentielle (14) et l'appareil d'usinage (10) possède un alésage (11) coaxial avec la vis différentielle (14), dans lequel est disposée une clé (25) destinée à faire tourner la vis différentielle (14), caractérisé en ce que la clé (25) est montée fixe dans la direction axiale, en ce que l'appareil d'usinage (10) est amené dans une position dans laquelle une face de bout (27) de la clé (25) vient en butée contre la vis différentielle (14), en ce que la clé (25) est tournée de telle sorte que la vis différentielle (14) dépasse d'une distance prédéfinie une surface de butée (15) de l'appareil d'usinage (10), en ce qu'ensuite l'outil (20) est vissé sur la vis différentielle (14) jusqu'à ce qu'il vienne en butée par frottement contre l'appareil d'usinage (10), et en ce que finalement, la vis différentielle (14) est bloquée avec un moment de rotation ajustable, au moyen de la clé (25).

2. Procédé selon la revendication 1, dans lequel la distance frottement de dépassement de la vis différentielle (14) est déterminée par la mesure de la position de l'appareil d'usinage (10).

3. Procédé selon la revendication 2, dans lequel la position est mesurée au moyen d'un capteur (40), qui commande, par l'intermédiaire d'une unité de commande (41), un servomoteur (31) servant à faire tourner la clé (25).

4. Procédé selon l'une quelconque des revendications 1 à 3, dans lequel l'outil (20) est vissé sur la vis différentielle (14) au moyen d'un changeur d'outil automatique (42).

5. Machine d'usinage pour la réalisation du procédé selon l'une quelconque des revendications 1 à 4, comprenant:
- un chariot (3) déplaçable sur les glissières de guidage (1) d'un bâti (2);
- un organe de levage (4) fonctionnant dans les deux directions, pour mettre en mouvement le chariot (3),
- un appareil d'usinage (10) monté sur le chariot (3), avec un alésage traversant coaxial (11),
- une vis différentielle (14) vissée avec un premier filetage (13) à une extrémité, coaxialement à l'alésage (11) dans l'appareil d'usinage (10), avec des surfaces d'engagement (24) de la clé,
- une clé (25) insérée avec jeu dans l'alésage (11), pour venir en prise avec les surfaces d'engagement (24) de la clé et avec une surface de bout (27) pour venir en butée contre la vis différentielle (14), la clé (25) étant montée de manière à pouvoir tourner sur le boîtier (2), mais tout en étant montée fixe axialement,
- un entraînement en rotation (32-35) pour la clé, ainsi
- qu'un organe de mesure (40) pour mesurer la course du chariot (3) à proximité de sa position de base rétractée.

6. Machine selon la revendication 5, dans laquelle on prévoit en outre un dispositif (42) de mise en place et de vissage automatique d'un outil (20) sur le deuxième filetage (22) de la vis différentielle (14).

7. Machine selon la revendication 5 ou 6, dans laquelle l'entraînement en rotation de la clé (25) comprend un entraînement commutable (32, 33, 34) pour donner un moment de rotation ajustable.

8. Machine selon la revendication 7, dans laquelle l'entraînement commutable (32, 33, 34) se compose d'une roue dentée (34) pouvant être connectée par l'intermédiaire d'un couplage (35), à la clé (25), d'une crémaillère (33) s'engrenant avec la roue dentée (34) et d'une unité de cylindre (32) connectée à la crémaillère (33).

9. Machine selon l'une quelconque des revendications 5 à 8, dans laquelle la clé (25) peut être tournée au moyen d'un servomoteur (31), qui est commandé par une unité de commande (41) depuis l'organe de mesure (40).
